# EUROPEAN PATENT APPLICATION

(11) **EP 2 518 364 A1**
(43) Date of publication of application: **31.10.2012**
(21) Application number: 10839547.6
(22) Date of filing: 24.12.2010
(51) Int. Cl.: F16F 9/50, B60G 17/08, F16F 9/46

(54) **SHOCK ABSORBER**

(30) Priority: 25.12.2009 JP 2009296109
(71) Applicant: Yamaha Hatsudoki Kabushiki Kaisha, Iwata-shi, Shizuoka 438-8501 (JP)
(72) Inventor: IWASE Ikkou, Shuchi-gun Shizuoka 437-0223 (JP); FUKUDA Hiromi, Shuchi-gun Shizuoka 437-0223 (JP); TSUJIYAMA Hirokazu, Shuchi-gun Shizuoka 437-0223 (JP)
(74) Representative: Grünecker, Kinkeldey, Stockmair & Schwanhäusser
(86) International application number: PCT/JP2010/073311
(87) International publication number: WO 2011/078317

(57) **Abstract**

A shock absorber 10 includes a hydraulic cylinder 12; a reservoir tank 14; and a damping force adjusting device 16. The damping force adjusting device 16 includes a valve body 100; a oil chamber 112; a solenoid coil 120; a plunger 128 and an oil path constitution member 130. The oil path constitution member 130 has an oil path 132 and an oil path 134 for hydraulic fluid which flows out of the hydraulic cylinder 12. The plunger 128 moves in an axial direction based on a magnetic field generated by the solenoid coil 120. The valve body 100 moves closer to or away from the oil path 132 inside the oil path 134 in association with the plunger 128. The oil chamber 112 and the oil path 134 communicate with each other via a communication path 100e of the valve body 100.

## Description

### TECHNICAL FIELD

The present invention relates to shock absorbers, and more specifically to a shock absorber in which a damping force is adjustable with a solenoid valve.

### BACKGROUND ART

Generally, in automobiles, motorcycles, etc., shock absorbers (dampers) are provided in order to damp vibrations generated in the vehicles.

For example, Patent Literature 1 discloses a hydraulic damper which is capable of adjusting a damping force with an electromagnetically actuated control valve (hereinafter will simply be called solenoid valve). The hydraulic damper includes a solenoid valve, a piston support shaft, and a piston which is fixed to the piston support shaft, provided in a cylinder. Space inside the cylinder is separated by the piston into an upper oil chamber and a lower oil chamber. The piston support shaft is formed with a through-hole on its axial center region, and a valve body is provided inside the through-hole, movably in the axial direction. Also, in the piston support shaft, there are formed an oil path which communicates the upper oil chamber with the through-hole, and an oil path which communicates the lower oil chamber with the through-hole. Oil inside the cylinder can move between the upper oil chamber and the lower oil chamber through the through-hole and the oil paths. At an end of the valve body, a return spring is provided whereas another end is contacted by a pin of the solenoid valve. A position of the valve body inside the through-hole can be adjusted by the solenoid valve. By this adjustment, a sectional area of the oil path is adjusted, whereby the amount of oil which moves in the oil path is adjusted. As a result, a damping force in the piston, i.e., a damping force of the hydraulic damper is adjusted.

### CITATION LIST

### PATENT LITERATURE

Patent Literature 1: JP-A Hei 6-262926

### SUMMARY OF INVENTION

### TECHNICAL PROBLEM

However, in the hydraulic damper disclosed in Patent Literature 1, the valve body must be provided at a tip of the pin of the solenoid valve, coaxially with the pin. Therefore, it is not possible to shorten the overall length of the hydraulic damper.

Therefore, a primary object of the present invention is to provide a shock absorber which has a compact configuration and is capable of making appropriate adjustment of a damping force.

### SOLUTION TO PROBLEM

According to an aspect of the present invention, there is provided a shock absorber including: a hydraulic cylinder which generates a damping force; a reservoir portion which stores at least a portion of hydraulic fluid that flows out of the hydraulic cylinder; a damping force adjusting portion which adjusts the damping force by adjusting a volume of hydraulic fluid that flows out of the hydraulic cylinder; and a first oil path which provides communication between the hydraulic cylinder and the reservoir portion via the damping force adjusting portion. With this configuration, the damping force adjusting portion includes: a second oil path having an opening at one end, and passed by hydraulic fluid which flows through the first oil path; a third oil path passed by hydraulic fluid which flows through the first oil path, communicating with the second oil path at the opening, and expanding outward beyond the opening; a tubular plunger; an electromagnetic actuator which generates a driving force for moving the plunger in an axial direction; a hollow tubular valve body which includes a first end surface, a second end surface and a communication path between the first end surface and the second end surface, and is fixed to an inner surface of the plunger; and an oil chamber opposed to the third oil path with the valve body in between. Further, the first end surface is opposed to the opening of the second oil path inside the third oil path whereas the second end surface is disposed in the oil chamber.

In the present invention, the electromagnetic actuator generates a driving force to move the plunger in the axial direction, and the plunger moves in the axial direction. Since the valve body is fixed to the inner surface of the plunger, the valve body moves in the axial direction in association with the plunger, causing the first end surface of the valve body to move closer to or away from the opening of the second oil path. This adjusts the area of the flow path for the hydraulic fluid between the first end surface and the opening of the second oil path, whereby the volume of hydraulic fluid which flows between the second oil path and the third oil path is adjusted. As a result, the volume of hydraulic fluid which flows through the first oil path is adjusted, and therefore it is possible to adjust a damping force generated in the hydraulic cylinder.

In the present invention, the valve body for adjusting the damping force of the hydraulic cylinder is provided on an inner surface of the plunger. Therefore, it is possible to prevent a situation where the damping force adjusting portion must have a large overall length. Thus, the shock absorber can be made compact.

Also, the third oil path and the oil chamber communicate with each other via the communication path of the valve body. In this case, the pressure of hydraulic fluid inside the oil chamber is substantially equal to the pressure of hydraulic fluid near the first end surface. Therefore, the pressure which the first end surface receives from the hydraulic fluid is substantially equal to the pressure which the second end surface receives from the hydraulic fluid. Thus, it is possible to prevent the valve body from moving in the axial direction due to the pressure which the first end surface receives from the hydraulic fluid. As a result, position adjustment of the valve body by means of the electromagnetic actuator becomes easy, so it is possible to appropriately adjust the damping force which is generated in the hydraulic cylinder.

Preferably, the valve body includes an enlarged surface in an outer surface, which is disposed in the third oil path and is a surface expanded outward with respect to an axial centerline beyond the first end surface. With this arrangement, hydraulic fluid which flows out of the hydraulic cylinder flows through the third oil path and into the second oil path. When the first end surface of the valve body is close to the opening of the second oil path, the flow path area for the hydraulic fluid between an outer edge portion of the first end surface and the opening of the second oil path is small. In this case, the flow of hydraulic fluid between the outer edge portion of the first end surface and the opening of the second oil path is fast, so the pressure of hydraulic fluid near the outer edge portion of the first end surface is low. For this reason, a force given from the hydraulic fluid to the outer edge portion of the first end surface is small. Specifically, there is generated a force (a fluid force) which works to move the valve body toward the second oil path. On the other hand, the third oil path is expanded outward beyond the second oil path. Therefore, even when the first end surface of the valve body is close to the opening of the second oil path, it is possible to provide a sufficient flow path area for the hydraulic fluid in regions in the third oil path except for the region between the first end surface and the second oil path. Therefore, the flow velocity of hydraulic fluid inside the third oil path is sufficiently low except for the region between the first end surface and the second oil path. Thus, the pressure of hydraulic fluid contacting the outer surface of the valve body inside the third oil path is sufficiently high except for a region near the outer edge portion of the first end surface. In this case, the enlarged surface is given a sufficient force from the hydraulic fluid and therefore, even if there is a difference between the force which the first end surface receives from the hydraulic fluid and the force which the second end surface receives from the hydraulic fluid, it is possible to offset the difference with the force which the enlarged surface receives from the hydraulic fluid. Because of this, it is possible to decrease the force (the fluid force) which works to move the valve body in the axial direction. As a result, position adjustment of the valve body by means of the electromagnetic actuator becomes easy, so it is possible to adjust the damping force which is generated in the hydraulic cylinder more reliably. Also, since the fluid force is small, a small electromagnetic force is enough to adjust the position of the valve body. This makes it possible to reduce power consumption at the electromagnetic actuator, and to make the electromagnetic actuator compact.

More preferably, the third oil path includes an enlarging portion enlarging outward gradually from the opening of the second oil path. When the first end surface of the valve body is close to the opening of the second oil path, the hydraulic fluid which flows from the third oil path into the second oil path flows between an inner surface of the enlarging portion and the outer surface of the valve body. Because of this, flow direction of the hydraulic fluid is substantially in parallel to the axial direction of the valve body. Therefore, flow direction of the hydraulic fluid which flows between the outer edge portion of the first end surface and the opening of the second oil path is also substantially parallel to the axial direction of the valve body. In this case, the arrangement prevents the hydraulic fluid from flowing at an increased velocity near an inner edge portion of the first end surface since it prevents the hydraulic fluid from flowing substantially in parallel to the first end surface near the first end surface of the valve body. This prevents the pressure of the hydraulic fluid from decreasing near the inner edge portion of the first end surface. Hence, the arrangement sufficiently reduces the force (the fluid force) which works to move the valve body in the axial direction. As a result, position adjustment of the valve body by means of the electromagnetic actuator becomes easier, so it is possible to adjust the damping force which is generated in the hydraulic cylinder more reliably. Also, since the fluid force is small, a smaller electromagnetic force is enough to adjust the position of the valve body. This makes it possible to further reduce power consumption at the electromagnetic actuator, and to make the electromagnetic actuator more compact.

Further preferably, the first end surface has a larger area than the second end surface, and hydraulic fluid which flows out of the hydraulic cylinder flows through the second oil path and into the third oil path. When the first end surface of the valve body is close to the second oil path, the flow path area for the hydraulic fluid between an outer edge portion of the first end surface and the opening of the second oil path is small. In this case, the flow of hydraulic fluid between the outer edge portion of the first end surface and the opening of the second oil path is fast, so the pressure of hydraulic fluid near the outer edge portion of the first end surface is low. For this reason, a force given from the hydraulic fluid to the outer edge portion of the first end surface is small. Specifically, there is generated a force (a fluid force) which works to move the valve body toward the second oil path. On the other hand, even when the first end surface of the valve body is close to the opening of the second oil path, the flow path area for the hydraulic fluid in the second oil path does not change. Therefore, the flow velocity of hydraulic fluid inside the second oil path is sufficiently slower than the flow velocity of hydraulic fluid between the first end surface and the opening of the second oil path, and the pressure of the hydraulic fluid inside the second oil path is sufficiently high. Therefore, the pressure of the hydraulic fluid which flows out of the second oil path and makes contact with the first end surface is sufficiently high except for a region near the outer edge portion of the first end surface. Meanwhile, the first end surface has a greater area than the second end surface. Because of this, the arrangement prevents a situation in which there is a difference between a force which the first end surface receives from the hydraulic fluid and a force which the second end surface receives from the hydraulic fluid even when there is a pressure decrease in the hydraulic fluid near the outer edge portion of the first end surface. Because of this, it is possible to decrease the force (the fluid force) which moves the valve body in the axial direction. As a result, position adjustment of the valve body by means of the electromagnetic actuator becomes easy, so it is possible to adjust the damping force which is generated in the hydraulic cylinder more reliably. Also, since the fluid force is small, a small electromagnetic force is enough to adjust the position of the valve body. This makes it possible to reduce power consumption at the electromagnetic actuator, and to make the electromagnetic actuator compact.

Further preferably, the damping force adjusting portion further includes an urging member which urges the valve body in an axial direction, and a support member which is provided on an outer surface of the valve body and supports the urging member. In this case, since the urging member urges the valve body, position adjustment of the valve body becomes even easier. Also, since the urging member is supported by the support member which is provided on the outer surface of the valve body, it is possible to provide the urging member on the outside (radially) of the valve body. Hence, it is possible to prevent a situation where the damping force adjusting portion must have a large overall length. As a result, it is possible to make the shock absorber compact.

The above-described object and other objects, characteristics, aspects and advantages of the present invention will become clearer from the following detailed description of embodiments of the present invention with reference to the attached drawings.

### BRIEF DESCRIPTION OF DRAWINGS

Fig. 1 is a sectional view of a shock absorber according to an embodiment of the present invention.
Fig. 2 is a plan view of the shock absorber in Fig. 1.
Fig. 3 is a sectional view taken in line A-A in Fig. 1.
Fig. 4 is a sectional view taken in line B-B in Fig. 1.
Fig. 5 is an enlarged sectional view for describing a relationship between a valve body and an oil path constitution member.
Fig. 6 is an enlarged sectional view showing a state where the valve body extends in an axial direction.
Fig. 7 is a hydraulic circuit diagram of the shock absorber according to the embodiment of the present invention.
Fig. 8 is a hydraulic circuit diagram showing another layout example of a damping force adjusting device in a shock absorber.
Fig. 9 is a hydraulic circuit diagram of a shock absorber including a damping force adjusting device of a different configuration.
Fig. 10 shows another example of the valve body.
Fig. 11 is an enlarged sectional view showing another example of the oil path constitution member.
Fig. 12 is a sectional view showing a damping force adjusting device having a damping force adjusting portion of a different configuration.
Fig. 13 is an enlarged sectional view showing a state where a valve body extends in an axial direction in the damping force adjusting device in Fig. 12.

### DESCRIPTION OF EMBODIMENTS

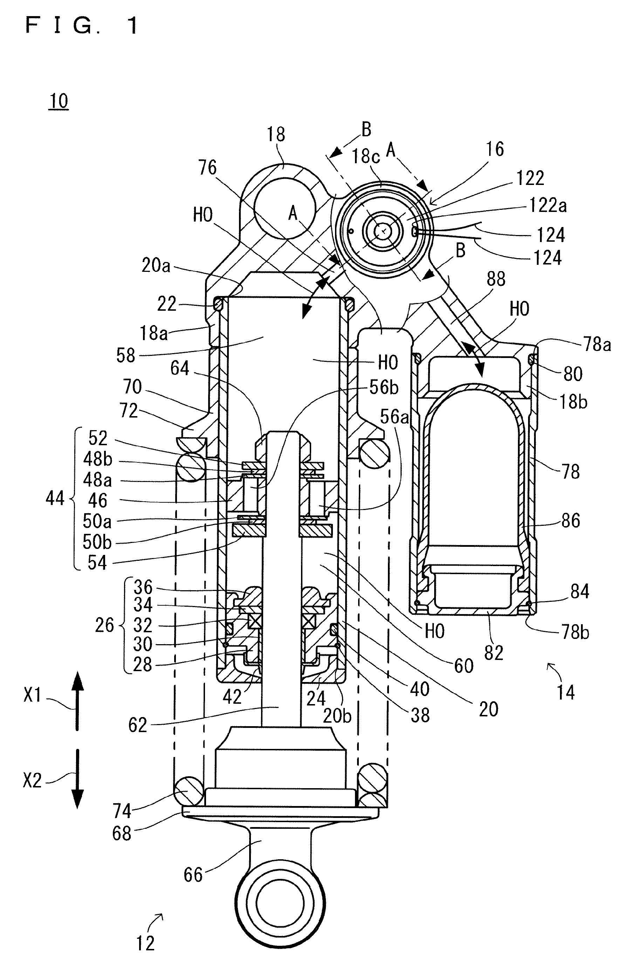

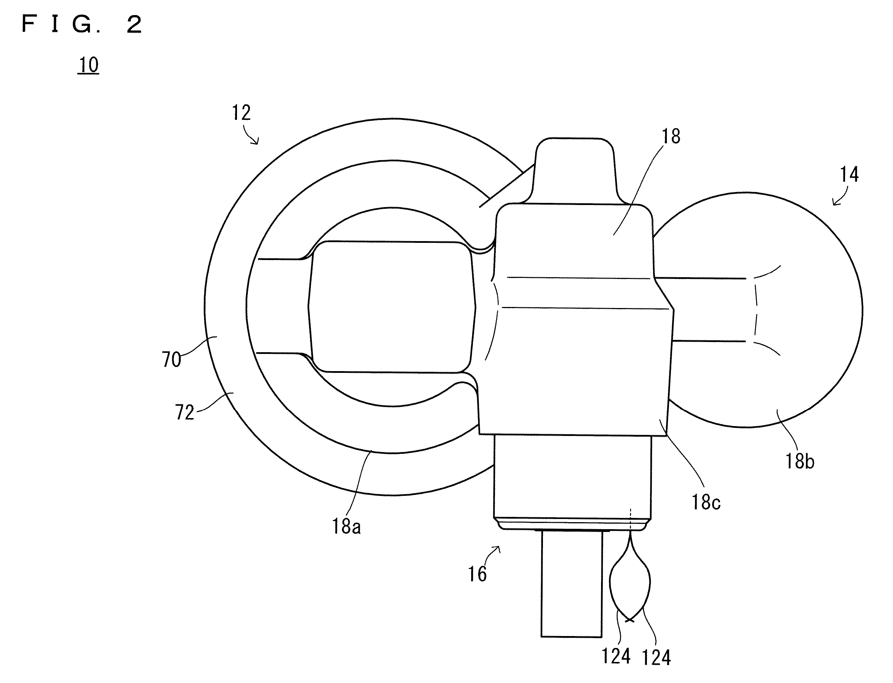

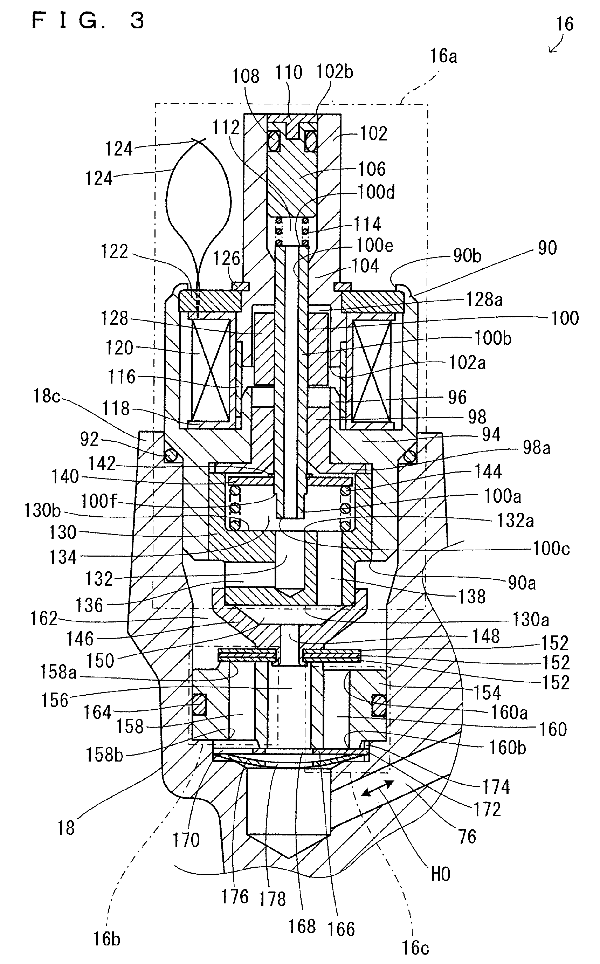

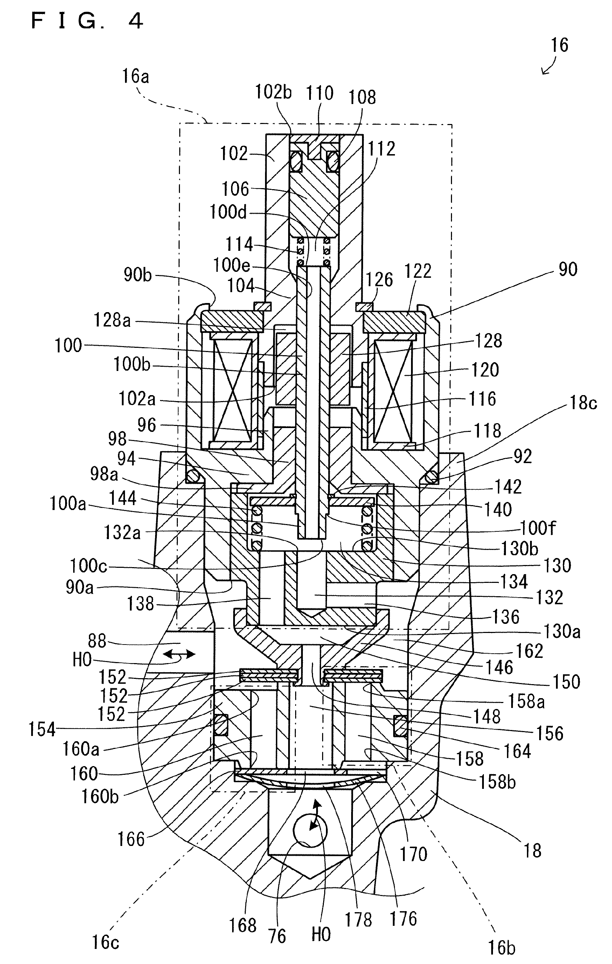

Hereinafter, embodiments of the present invention will be described with reference to the drawings. Fig. 1 is a sectional view of a shock absorber 10 according to an embodiment of the present invention whereas Fig. 2 is a plan view of the shock absorber 10 in Fig. 1. Also, Fig. 3 is a sectional view taken in line A-A in Fig. 1, whereas Fig. 4 is a sectional view taken in line B-B in Fig. 1.

Referring to Fig. 1 and Fig. 2, the shock absorber 10 includes a hydraulic cylinder 12, a reservoir tank 14, a damping force adjusting device 16 and a common member 18 having tubular portions 18a, 18b, 18c. The hydraulic cylinder 12, the reservoir tank 14 and the damping force adjusting device 16 are integral with each other via the common member 18.

Referring to Fig. 1, the hydraulic cylinder 12 includes a cylinder 20 which has openings 20a, 20b at its two ends. In the cylinder 20, an end portion on the opening 20a side is fixed inside the tubular portion 18a of the common member 18. Specifically, an inner circumferential surface of the tubular portion 18a and an outer circumferential surface of the cylinder 20 are screwed to each other, for example. The cylinder 20 has the outer circumferential surface provided with an O ring 22 for sealing between the tubular portion 18a and the cylinder 20.

In the cylinder 20, a hollow, substantially disc-shaped cylinder cap 24 is attached to an end portion on the opening 20b side. Inside the cylinder 20, a rod guide 26 is provided near the opening 20b. The rod guide 26 includes a hollow cylindrical guide main body 28; and in addition, a hollow cylindrical bushing 30, an annular oil seal 32, a hollow disc-shaped plate member 34 and a hollow substantially disc-shaped rubber member 36 provided in this order, counted from an end side (the opening 20b side) in an inner circumferential surface of the guide main body 28. The plate member 34 prevents the oil seal 32 from slipping out from inside the guide main body 28 whereas the rubber member 36 reduces impact when a stopper 54, which will be described later, makes contact with the rod guide 26.

In an inner circumferential surface of the cylinder 20, a circlip 38 is provided near the opening 20b for limiting movement of the rod guide 26 toward the opening 20b. In an outer circumferential surface of the guide main body 28, an O ring 40 for sealing between the cylinder 20 and the guide main body 28 is provided. At an end surface (on the opening 20b side) of the rod guide 26, a seal member 42 for sealing between the rod guide 26 and a piston rod 62 which will be described later is provided.

In the cylinder 20, a piston assembly 44 is provided between the opening 20a and the rod guide 26 movably in an axial direction of the cylinder 20. The piston assembly 44 includes a substantially columnar main body portion 46, hollow disc-shaped plate springs 48a, 48b, 50a, 50b and hollow disc-shaped stoppers 52, 54. The main body portion 46 has a plurality of oil paths 56a and a plurality of oil paths 56b penetrating itself in a direction parallel to an axial direction of the main body portion 46. The plate springs 48a, 48b and the stopper 52 are provided in this order in one surface (on the opening 20a side) of the main body portion 46 whereas the plate springs 50a, 50b and the stopper 54 are provided in this order in the other surface (on the opening 20b side) of the main body portion 46. The piston assembly 44 partitions an inside space of the cylinder 20 into an oil chamber 58 and an oil chamber 60. The oil chambers 58, 60 are loaded with hydraulic fluid HO.

A piston rod 62 is inserted into the rod guide 26 and the piston assembly 44. The piston rod 62 is slidable with respect to the rod guide 26. A nut 64 is attached to an end portion of the piston rod 62. In an outer circumferential surface of the piston rod 62, movement of the stopper 52 in an Arrow X1 direction is limited by the nut 64. Because of this, movement of the piston assembly 44 in the Arrow X1 direction is limited in the outer circumferential surface of the piston rod 62. In the outer circumferential surface of the piston rod 62, movement of the stopper 54 in an Arrow X2 direction is limited. Because of this, movement of the piston assembly 44 in the Arrow X2 direction is limited in the outer circumferential surface of the piston rod 62. Therefore, the piston assembly 44 and the piston rod 62 move integrally with each other in the cylinder 20.

In the oil paths 56a, openings on the oil chamber 60 side are closed by the plate springs 50a, 50b whereas a gap is formed between openings on the oil chamber 58 side of the oil paths 56a and the plate springs 48a, 48b. Also, in the oil paths 56b, openings on the oil chamber 58 side are closed by the plate springs 48a, 48b whereas a gap is formed between openings on the oil chamber 60 side of the oil paths 56b and the plate springs 50a, 50b.

Outside of the cylinder 20, the other end portion of the piston rod 62 is provided with a connecting member 66 for connecting the piston rod 62 to a body (not illustrated) of a motorcycle (not illustrated) for example. The connecting member 66 has a flange portion 68 which has a greater diameter than an outer diameter of the cylinder 20. In the outer circumferential surface of the cylinder 20, a generally cylindrical spring seat 70 is provided. The spring seat 70 has an annular flange portion 72 opposed to the flange portion 68 of the connecting member 66. In a radial direction of the cylinder 20 and of the piston rod 62, a coil spring 74 is supported by the flange portion 68 and the flange portion 72. The coil spring 74 absorbs impact and vibration transmitted from the vehicle body (not illustrated) to the connecting member 66. It should be noted here that the spring seat 70 has its one end surface contacting the tubular portion 18a. Thus, movement of the spring seat 70 in the Arrow X1 direction is limited. When the shock absorber 10 is installed in the vehicle body (not illustrated), the coil spring 74 is compressed. Therefore, the coil spring 74 urges the connecting member 66 in the Arrow X2 direction.

Referring to Fig. 1, Fig. 3 and Fig. 4, in the common member 18, an oil path 76 is formed to provide communication between inside of the tubular portion 18a and inside of the tubular portion 18c. Referring to Fig. 1, when the piston assembly 44 (the piston rod 62) moves in the Arrow X1 direction, a volumetric capacity of the oil chamber 58 decreases whereas a volumetric capacity of the oil chamber 60 increases. Because of this, an amount of hydraulic fluid HO which is equal to an amount of the volumetric increase in the oil chamber 60 flows from the oil chamber 58 into the oil chamber 60. Specifically, hydraulic fluid HO in the oil chamber 58 flows into the oil chamber 60 via the oil paths 56a while elastically deforming the plate springs 50a, 50b. During this, since the hydraulic fluid HO moves against a resistance from the plate springs 50a, 50b, a damping force is generated in the hydraulic cylinder 12. Since there is the piston rod 62 inside the oil chamber 60, the volume of decrease in the oil chamber 58 is greater than the volume of increase in the oil chamber 60 (the amount of hydraulic fluid HO flowing from the oil chamber 58 to the oil chamber 60). For this reason, a portion of the hydraulic fluid HO in the oil chamber 58 flows into the tubular portion 18c via the oil path 76.

On the other hand, when the piston assembly 44 (the piston rod 62) moves in the Arrow X2 direction, the volumetric capacity of the oil chamber 60 decreases whereas the volumetric capacity of the oil chamber 58 increases. Because of this, an amount of hydraulic fluid HO which is equal to an amount of the volumetric decrease in the oil chamber 60 flows from the oil chamber 60 into the oil chamber 58. Specifically, hydraulic fluid HO in the oil chamber 60 flows into the oil chamber 58 via the oil paths 56b while elastically deforming the plate springs 48a, 48b. During this, since the hydraulic fluid HO moves against a resistance from the plate springs 48a, 48b, a damping force is generated in the hydraulic cylinder 12. Since there is no piston rod 62 inside the oil chamber 58, the volume of increase in the oil chamber 58 is greater than the volume of decrease in the oil chamber 60 (the amount of hydraulic fluid HO flowing from the oil chamber 60 to the oil chamber 58). For this reason, a portion of the hydraulic fluid HO in tubular portion 18c flows into the oil chamber 58 via the oil path 76.

Referring to Fig. 1, the reservoir tank 14 includes a cylindrical container 78 which has openings 78a, 78b at its two ends. In the container 78, an end portion on the opening 78a side is fixed to the tubular portion 18b of the common member 18. Specifically, an outer circumferential surface of the tubular portion 18b and an inner circumferential surface of the container 78 are screwed to each other for example. In the outer circumferential surface of the tubular portion 18b, an O ring 80 for sealing between the tubular portion 18b and the container 78 is provided.

In the container 78, a cap 82 is provided at an end portion on the opening 78b side, closing the opening 78b. In the inner circumferential surface of the container 78, a circlip 84 is provided near the opening 78b for preventing the cap 82 from coming off. In the container 78, the cap 82 is provided with a bladder 86 which deforms in accordance with the amount (pressure) of hydraulic fluid HO inside the container 78. The bladder 86 is loaded with nitrogen gas for example.

Referring to Fig. 1 and Fig. 4, in the common member 18, an oil path 88 is formed to provide communication between inside of the tubular portion 18b and inside of the tubular portion 18c. Referring to Fig. 1, hydraulic fluid HO moves between the container 78 and the tubular portion 18c via the oil path 88.

Referring to Fig. 3 and Fig. 4, the damping force adjusting device 16 includes a damping force adjusting portion 16a, a base-valve portion 16b and a check-valve portion 16c. The damping force adjusting portion 16a includes a hollow, generally cylindrical main body portion 90 which has openings 90a, 90b at its two ends. In the main body portion 90, an end portion on the opening 90a side is fixed to an inside of the tubular portion 18c. Specifically, an inner circumferential surface of the tubular portion 18c and an outer circumferential surface of the main body portion 90 are screwed to each other for example. An O ring 92 for sealing between the tubular portion 18c and the main body portion 90 is provided between the inner circumferential surface of the tubular portion 18c and the outer circumferential surface of the main body portion 90.

The main body portion 90 has a flange portion 94 extending annularly toward an axial centerline thereof, at a substantially axially intermediate portion. The flange portion 94 has, in its inner edge portion, a tubular portion 96 extending toward the opening 90b. A generally cylindrical guide member 98 which has a flange portion 98a at its end is inserted into the tubular portion 96. The flange portion 94 and the flange portion 98a are engaged with each other. This limits movement of the guide member 98 toward the opening 90b inside the main body portion 90.

A hollow cylindrical valve body 100 is inserted slidably into the guide member 98. The valve body 100 has a small diameter portion 100a, a large diameter portion 100b, a first end surface 100c, a second end surface 100d, a communication path 100e and an enlarged surface 100f. The small diameter portion 100a has a constant diameter between the first end surface 100c and the enlarged surface 100f. The small diameter portion 100a has a length in its axial direction, which is preferably not smaller than 10 percent, more preferably not smaller than 20 percent, and even more preferably not smaller than 100 percent of the diameter of the small diameter portion 100a (the first end surface 100c). The large diameter portion 100b has a constant diameter between the second end surface 100d and the enlarged surface 100f. The diameter of the large diameter portion 100b is greater than the diameter of the small diameter portion 100a. The first end surface 100c and the second end surface 100d are both annular. The area of the first end surface 100c is smaller than the area of the second end surface 100d. The communication path 100e is formed on an axial centerline of the valve body 100, and provides communication between the first end surface 100c and the second end surface 100d. The enlarged surface 100f is formed between the small diameter portion 100a and the large diameter portion 100b in an outer circumferential surface of the valve body 100. Specifically, the enlarged surface 100f is a surface expanded outward with respect to the axial centerline of the valve body 100 beyond the first end surface 100c. Also, the enlarged surface 100f is formed to be substantially vertical to the axial centerline of the valve body 100, and to oppose an opening 132a (an oil path 132) which will be described later. The valve body 100 is made of a nonmagnetic material.

A hollow cylindrical support member 102 is provided coaxially with the tubular portion 96, to oppose the tubular portion 96. The support member 102 has openings 102a, 102b at its two ends, and a guide portion 104 which extends annularly toward an axial centerline at a substantially axially intermediate portion. The guide portion 104 slidably supports the valve body 100.

In an inner circumferential surface of the support member 102, a substantially columnar spring seat 106 is fixed to a position which is closer to the opening 102b than to the guide portion 104. Specifically, the inner circumferential surface of the support member 102 and an outer circumferential surface of the spring seat 106 are screwed to each other for example. In the outer circumferential surface of the spring seat 106, there is provided an O ring 108 for sealing between the support member 102 and the spring seat 106. In the support member 102, a cap 110 is attached to an end portion on the opening 102b side, closing the opening 102b.

In the support member 102, an oil chamber 112 is formed between the guide portion 104 and the spring seat 106. Inside the oil chamber 112, a coil spring 114 is supported by the second end surface 100d of the valve body 100 and the spring seat 106. The coil spring 114 urges the valve body 100 toward an opening 132a which will be described later.

A cylindrical tube member 116 connects the tubular portion 96 and the support member 102 with each other. The support member 102 has an outer circumferential surface, which is substantially flush with an outer circumferential surface of the tube member 116. The tube member 116 is made of a nonmagnetic material. Inside the main body portion 90, a bobbin 118 is provided, covering the outer circumferential surface of the support member 102 and the outer circumferential surface of the tube member 116. A solenoid coil 120 is wound around the bobbin 118.

In an inner circumferential surface of the main body portion 90, a hollow, disc-shaped cap 122 is attached to an end portion on the opening 90b side. The cap 122 is formed with a hole 122a (see Fig. 1) for lead wires 124 (see Fig. 1) of the solenoid coil 120 to be routed out of the main body portion 90. The cap 122 and the support member 102 are fixed to each other using a stopper 126. The cap 122 prevents the bobbin 118 from slipping out of the main body portion 90. It should be noted here that the cap 122 is made of a magnetic material (iron, for example).

In the outer circumferential surface of the valve body 100, a cylindrical plunger 128 is fixed between the guide member 98 and the guide portion 104. The tubular portion 96 has an inner diameter, which is greater than an outer diameter of the plunger 128. Also, in the support member 102, an inner diameter of a portion which is closer to the opening 102a than the guide portion 104 is greater than the outer diameter of the plunger 128. Therefore, the plunger 128 can move axially between the guide member 98 and the guide portion 104. In the damping force adjusting device 16, it is possible to move the plunger 128 in an axial direction between the guide member 98 and the guide portion 104 by adjusting a magnetic flux density of a magnetic field which is generated by the solenoid coil 120. Because of this, the valve body 100 moves in the axial direction. It should be noted here that the hydraulic fluid HO also fills a space 128a (a space defined by the tubular portion 96, the guide member 98, the guide portion 104 and the tube member 116) where the plunger 128 is disposed. The space 128a communicates with an oil path 134 which will be described later, via a gap between the outer circumferential surface of the valve body 100 and an inner circumferential surface of the guide member 98 while communicating also with the oil chamber 112 via a gap between the outer circumferential surface of the valve body 100 and an inner circumferential surface of the guide portion 104.

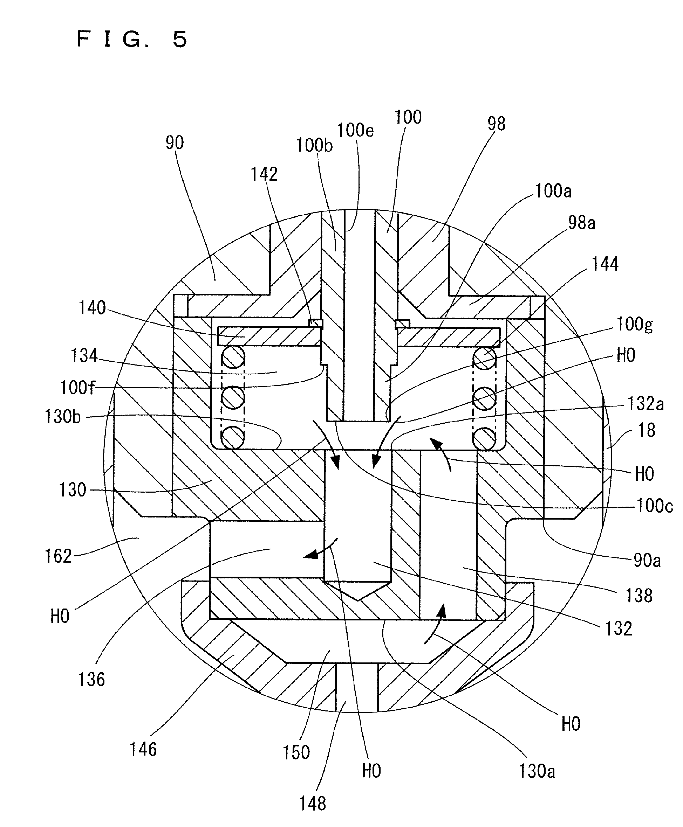

Referring also to Fig. 5, inside the main body portion 90, a substantially columnar oil path constitution member 130 is fitted into the opening 90a side so as to contact the flange portion 98a of the guide member 98. The oil path constitution member 130 has a columnar oil path 132, a columnar oil path 134, a plurality (two in the present embodiment) of columnar oil paths 136 and a plurality (two in the present embodiment) of columnar oil paths 138. The oil path 132 has an opening 132a on one end, and is formed on an axial centerline of the oil path constitution member 130. The diameter of the opening 132a (the oil path 132) is greater than the diameter of the first end surface 100c (the small diameter portion 100a). The oil path 134 communicates with the oil path 132 at the opening 132a, being expanded outward beyond the opening 132a on the axial centerline of the oil path constitution member 130. The oil path 134 and the oil chamber 112 (see Fig. 3) of the support member 102 (see Fig. 3) are opposed to each other with the valve body 100 in between. The first end surface 100c of the valve body 100 is inside the oil path 134. The oil path 134 and the oil chamber 112 (see Fig. 3) communicate with each other via the communication path 100e of the valve body 100. Each oil path 136 extends in a radial direction of the oil path constitution member 130, with an end communicating with the oil path 132 and the other end opening on an outer circumferential surface of the oil path constitution member 130. Each oil path 138 is substantially in parallel to the oil path 132, with an end communicating with the oil path 134 and the other end opening on an end surface 130a of the oil path constitution member 130. Inside the oil path constitution member 130, a flange surface 130b is formed between the oil paths 132, 138 and the oil path 134 to oppose the flange portion 98a of the guide member 98.

On an outer circumferential surface of the large diameter portion 100b inside the oil path 134, there are provided a hollow disc-shaped spring seat 140 and an annular stopper 142 for limiting the spring seat 140 in its movement toward the second end surface 100d (see Fig. 3).

The flange surface 130b and the spring seat 140 support a coil spring 144 radially (on the outer side) of the valve body 100. The coil spring 144 urges the valve body 100 toward the oil chamber 112 (see Fig. 3).

Referring to Fig. 3 and Fig. 4, the oil path constitution member 130 has its end portion (an end portion on the end surface 130a side) fitted into an end portion of a bowl-shaped partitioning wall member 146. The partitioning wall member 146 has an oil path 148 and an oil path 150. The oil path 148 is formed on an axial centerline of the partitioning wall member 146. The oil path 150 is formed to continue to the oil path 148 and then expands in a radial direction from the oil path 148 on the axial centerline of the partitioning wall member 146. The oil path 150, and the oil path 132 of the oil path constitution member 130 do not directly communicate with each other but via the oil paths 138 and the oil path 134.

At the other end portion of the partitioning wall member 146, there is provided a hollow, generally cylindrical valve constitution member 154 via a plurality of hollow disc-shaped plate springs 152. The valve constitution member 154 has an oil path 156, a plurality (two in the present embodiment) of oil paths 158 and a plurality (two in the present embodiment) of oil paths 160. The oil path 156 is formed on an axial centerline of the valve constitution member 154, and communicates with the oil paths 138 via the oil paths 148, 150. Each of the oil paths 158 and each of the oil paths 160 are formed in parallel to the oil path 156. Each oil path 158 has openings 158a, 158b at its two ends. Each oil path 160 has openings 160a, 160b at its two ends. The plate springs 152 close the openings 158a of the oil paths 158 on an end surface of the valve constitution member 154. Thus, on the inner circumferential surface of the tubular portion 18c, the oil paths 158 are separated from a tubular oil path 162 which is formed by the main body portion 90, the partitioning wall member 146 and the valve constitution member 154. It should be noted here that the openings 160a of the oil paths 160 are open, so the oil path 162 and the oil paths 160 communicate with each other. An O ring 164 is provided on an outer circumferential surface of the valve constitution member 154 for sealing between the outer circumferential surface of the valve constitution member 154 and the inner circumferential surface of the tubular portion 18c.

On the other end surface of the valve constitution member 154, a disc-shaped check plate 166 is provided. The check plate 166 has a communication hole 168, a plurality of cutouts 170 and a projection 172 (see Fig. 3). The communication hole 168 is formed on a center of a check plate 168 (coaxially with the oil path 156). Each cutout 170 is formed to oppose one of the openings 158b of the oil paths 158. Referring to Fig. 3, the projection 172 projects in a radial direction on an outer circumferential surface of the check plate 166. In the inner circumferential surface of the tubular portion 18c, a mating groove 174 is formed to extend in parallel to an axial direction of the check plate 166. The projection 172 is slidably fitted into the mating groove 174. This allows axial movement of the check plate 166 while preventing rotation thereof about the axis.

Referring to Fig. 3 and Fig. 4, a disc spring 176 is provided substantially coaxially with the check plate 166. The disc spring 176 urges the check plate 166 toward the valve constitution member 154. Because of this, the check plate 166 closes the openings 160b of the oil paths 160 on the other end surface of the valve constitution member 154. The disc spring 176 has a communication hole 178 formed coaxially with the communication hole 168.

It should be noted here that in the damping force adjusting device 16, the main body portion 90, the valve body 100, the support member 102, the spring seat 106, the coil spring 114, the tube member 116, the bobbin 118, the solenoid coil 120, the cap 122, the stopper 126, the oil path constitution member 130, the spring seat 140, the stopper 142 and the coil spring 144 are included in the damping force adjusting portion 16a; the plate springs 152 and the oil paths 158 are included in the base-valve portion 16b; and the plate springs 152, the oil paths 160, the check plate 166 and the disc spring 176 are included in the check-valve portion 16c.

Next, detailed description will be made for flow paths of hydraulic fluid HO inside the damping force adjusting device 16. First, the description will cover a case where the piston assembly 44 moves in the Arrow X1 direction (see Fig. 1) thereby causing the hydraulic fluid HO to flow from the cylinder 20 into the tubular portion 18c via the oil path 76.

Referring to Fig. 3 and Fig. 4, since the openings 160b of the oil paths 160 are closed by the check plate 166 as described earlier, hydraulic fluid HO which has flowed from the oil path 76 into the tubular portion 18c is prevented from flowing into the oil paths 160 via the openings 160b. For this reason, a portion of the hydraulic fluid HO which has flowed from the oil path 76 into the tubular portion 18c passes through the communication hole 178 and the cutouts 170 and flows into the oil paths 158 of the base-valve portion 16b whereas the remaining portion of the hydraulic fluid HO passes through the communication hole 178 and the communication hole 168, and flows into the oil path 156.

As the hydraulic fluid HO flows into the oil paths 158, pressure of the hydraulic fluid HO inside the oil paths 158 increases, to elastically deform the plate springs 152. Because of this, the hydraulic fluid HO flows from the oil paths 158 into the oil path 162 under a resistance (a restorative force) from the plate springs 152. Thereafter, the hydraulic fluid HO which has flowed into the oil path 162 flows into the reservoir tank 14 via the oil path 88.

On the other hand, the hydraulic fluid HO which has flowed into the oil path 156 passes through the oil path 148, the oil path 150, the oil paths 138, the oil path 134, the oil path 132 and the oil paths 136, and then flows into the oil path 162. Thereafter, the hydraulic fluid HO which has flowed into the oil path 162 flows into the reservoir tank 14 via the oil path 88.

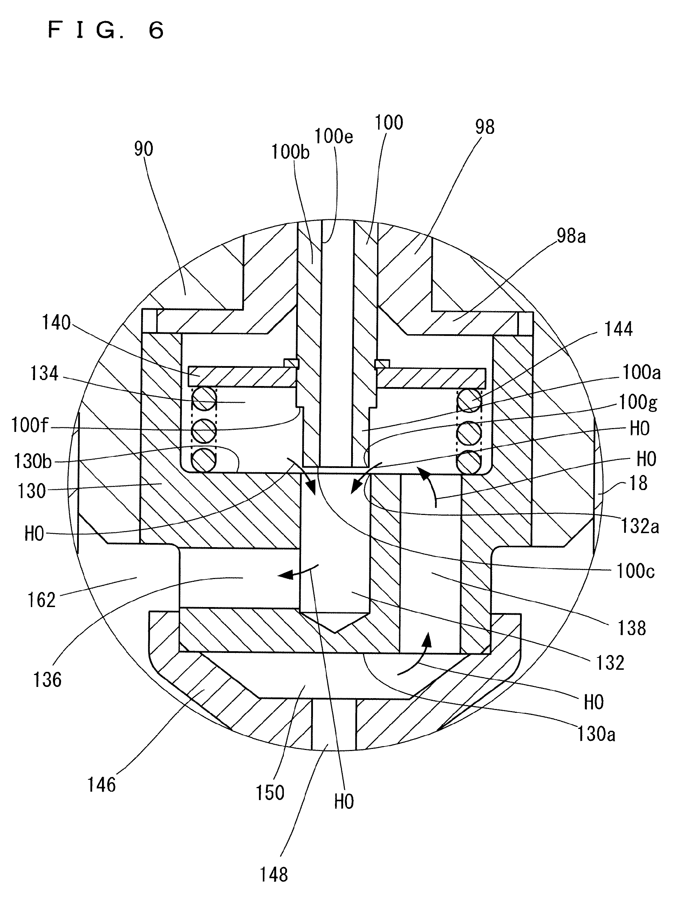

Now, in the damping force adjusting device 16, as has been described, the valve body 100 can be moved axially by adjusting a magnetic flux density of a magnetic field generated by the solenoid coil 120. Because of this, it is possible to adjust the volume of hydraulic fluid HO which flows inside the oil path constitution member 130. Specifically, as shown in Fig. 6, it is possible, by moving the valve body 100 so that the first end surface 100c of the valve body 100 comes closer to the opening 132a (the oil path 132), to decrease a flow path area for the hydraulic fluid HO between an outer edge portion 100g of the first end surface 100c and the opening 132a (the oil path 132). Because of this, it is possible to decrease the flow volume of the hydraulic fluid HO which flows from the oil path 134 into the oil path 132. In this case, referring to Fig. 3 and Fig. 4, a portion of the hydraulic fluid HO which has flowed from the oil path 76 into the tubular portion 18c flows into the oil paths 158 at an increased flow volume. Because of this, there is an increase in the volume of the hydraulic fluid HO which flows against the resistance from the plate springs 152 as a portion of the hydraulic fluid HO which flows from the oil path 76 to the reservoir tank 14 (see Fig. 1) via the damping force adjusting device 16. As a result, a pressure difference between the hydraulic fluid HO inside the oil chamber 58 (see Fig. 1) and the hydraulic fluid HO inside the reservoir tank 14 (Fig. 1) increases, which increases the damping force generated in the hydraulic cylinder 12.

On the other hand, as shown in Fig. 5, it is possible by moving the valve body 100 so that the first end surface 100c of the valve body 100 moves away from the opening 132a (the oil path 132), to increase the flow path area for the hydraulic fluid HO between the outer edge portion 100g of the first end surface 100c and the opening 132a (the oil path 132). Because of this, it is possible to increase the flow volume of the hydraulic fluid HO which flows from the oil path 134 into the oil path 132. In this case, referring to Fig. 3 and Fig. 4, a portion of the hydraulic fluid HO which has flowed from the oil path 76 into the tubular portion 18c flows into the oil paths 158 at a decreased flow volume. Because of this, there is a decrease in the volume of the hydraulic fluid HO flowing against the resistance from the plate springs 152 as a portion of the hydraulic fluid HO which flows from the oil path 76 to the reservoir tank 14 (see Fig. 1) via the damping force adjusting device 16. As a result, a pressure difference between the hydraulic fluid HO inside the oil chamber 58 (see Fig. 1) and the hydraulic fluid HO inside the reservoir tank 14 (Fig. 1) decreases, which decreases the damping force generated in the hydraulic cylinder 12.

Next, description will cover a case where the piston assembly 44 moves in the Arrow X2 direction (see Fig. 1) thereby causing hydraulic fluid HO inside the reservoir tank 14 to flow into the tubular portion 18c via the oil path 88 (see Fig. 4).

Referring to Fig. 3 and Fig. 4, since the openings 158a of the oil paths 158 are closed by the plate springs 152, hydraulic fluid HO which has flowed from the oil path 88 (see Fig. 4) into the oil path 162 inside the tubular portion 18c is prevented from flowing into the oil paths 158 via the openings 158a. For this reason, a portion of the hydraulic fluid HO which flows from the oil path 88 (see Fig. 4) into the oil path 162 flows into the oil paths 160 while the rest of the hydraulic fluid HO flows into the oil paths 136.

As hydraulic fluid HO flows into the oil paths 160, pressure of the hydraulic fluid HO inside the oil paths 160 increases, to push the check plate 166 toward the disc spring 176. Because of this, the openings 160b of the oil paths 160 become passable, and the hydraulic fluid HO inside the oil paths 160 flows out of the openings 160b. The hydraulic fluid HO which has flowed out of the openings 160b passes through the communication hole 168 and the communication hole 178, and then flows into the cylinder 20 via the oil path 76. On the other hand, the hydraulic fluid HO which has flowed into the oil paths 136 passes through the oil path 132, the oil path 134, the oil paths 138, the oil path 150, the oil path 148, the oil path 156, the communication hole 168 and the communication hole 178, and then flows from the oil path 76 into the cylinder 20 (see Fig. 1). It should be noted here that the force of the disc spring 176 urging the check plate 166 is sufficiently small, so there is little resistance from the check plate 166 (restorative force of the disc spring 176) to the hydraulic fluid HO which passes through the openings 160b. Therefore, even if the amount of hydraulic fluid HO which passes through the oil paths 160 and flows into the oil path 76 is increased, there is little change in the pressure difference between the hydraulic fluid HO inside the oil chamber 58 (see Fig. 1) and the hydraulic fluid HO inside the reservoir tank 14 (Fig. 1). For this reason, there is little change in the damping force which is generated in the hydraulic cylinder 12.

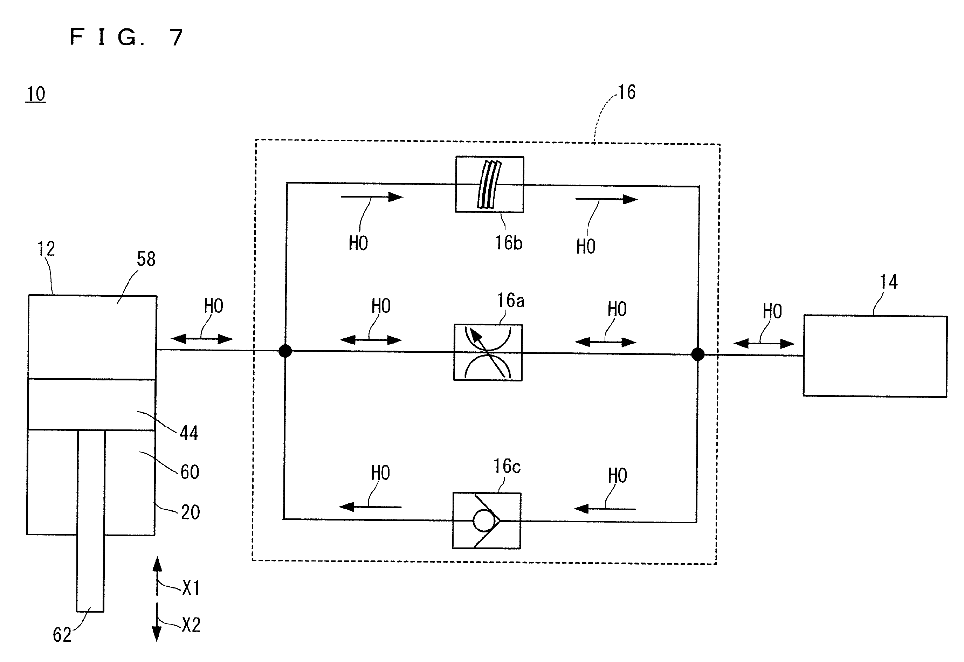

Fig. 7 shows the hydraulic circuit in the shock absorber 10 in a conceptual fashion in order to review the above-described flow paths of hydraulic fluid HO. Now, the flow routes in the shock absorber 10 will be reviewed with reference to Fig. 7. When the piston assembly 44 (see Fig. 1) moves in the Arrow X1 direction, hydraulic fluid HO inside the oil chamber 58 passes through the damping force adjusting portion 16a and the base-valve portion 16b and flows into the reservoir tank 14. During this, by adjusting the position of the valve body 100 (see Fig. 3) in the damping force adjusting portion 16a, it is possible to adjust a ratio of the volume of hydraulic fluid HO which passes through the damping force adjusting portion 16a to the volume of hydraulic fluid HO which passes through the base-valve portion 16b. Because of this, a pressure difference between the hydraulic fluid HO inside the oil chamber 58 (see Fig. 1) and the hydraulic fluid HO inside the reservoir tank 14 (Fig. 1) is adjusted, whereby the damping force generated in the hydraulic cylinder 12 is adjusted. On the other hand, when the piston assembly 44 moves in the Arrow X2 direction, the hydraulic fluid HO inside the reservoir tank 14 passes through the damping force adjusting portion 16a and the check-valve portion 16c, and flows into the oil chamber 58. During this, the hydraulic fluid HO does not receive a large resistance from the check plate 166 (see Fig. 3) at the check-valve portion 16c, so there is little change in the pressure difference between the hydraulic fluid HO inside the oil chamber 58 (see Fig. 1) and the hydraulic fluid HO inside the reservoir tank 14 (Fig. 1). Therefore, there is little change in the damping force which is generated in the hydraulic cylinder 12. As described, according to the shock absorber 10, it is possible to adjust the damping force which is generated when the piston rod 62 receives a force in a compressing direction (Arrow X1 direction), by the damping force adjusting portion 16a.

In the present embodiment, the reservoir tank 14 represents the reservoir portion; the oil paths 76, 88, 148, 150, 156, 162 are included in the first oil path; the oil path 132 represents the second oil path; the oil path 134 represents the third oil path; the solenoid coil 120 represents the electromagnetic actuator; the coil spring 144 represents the urging member; and the spring seat 140 represents the support member.

Next, functions and advantages of the shock absorber 10 will be described.
Referring to Fig. 3 and Fig. 4, in the damping force adjusting portion 16a of the shock absorber 10, the solenoid coil 120 generates a driving force (a magnetic field) for moving the plunger 128 in the axial direction, and so the plunger 128 moves in the axial direction. In association with the plunger 128, the valve body 100 moves in the axial direction, causing the first end surface 100c of the valve body 100 to move closer to or away from the opening 132a (the oil path 132). This adjusts the flow path area for hydraulic fluid HO between the outer edge portion 100g of the first end surface 100c and the opening 132a (the oil path 132). As a result, a pressure difference between the hydraulic fluid HO inside the oil chamber 58 (see Fig. 1) and the hydraulic fluid HO inside the reservoir tank 14 (Fig. 1) is adjusted, whereby the damping force generated in the hydraulic cylinder 12 is adjusted.

Note here that in the shock absorber 10, the valve body 100 for adjusting the damping force of the hydraulic cylinder 12 is provided on the inner circumferential surface of the plunger 128. Therefore, it is possible to prevent a situation where the damping force adjusting portion 16a must have a large overall length. Because of this, it is possible to make the shock absorber 10 compact.

Also, in the shock absorber 10, the oil path 134 and the oil chamber 112 communicate with each other via the communication path 100e of the valve body 100. In this case, the pressure of the hydraulic fluid HO inside the oil chamber 112 is substantially equal to the pressure of the hydraulic fluid HO near the first end surface 100c. Therefore, the pressure which the first end surface 100c receives from the hydraulic fluid HO is substantially equal to the pressure which the second end surface 100d receives from hydraulic fluid HO. Because of this, it is possible to prevent the valve body 100 from moving in the axial direction due to the pressure which the first end surface 100c receives from the hydraulic fluid HO. As a result, position adjustment of the valve body 100 by the solenoid coil 120 becomes easy, so it is possible to appropriately adjust the damping force generated in the hydraulic cylinder 12. It should be noted here that the gap between the inner circumferential surface of the guide member 98 and the outer circumferential surface of the valve body 100 as well as the gap between the inner circumferential surface of the guide portion 104 and the outer circumferential surface of the valve body 100 are sufficiently smaller than the communication path 100e. Therefore, there is little flow of hydraulic fluid HO in the gap between the inner circumferential surface of the guide member 98 and the outer circumferential surface of the valve body 100 or in the gap between the inner circumferential surface of the guide portion 104 and the outer circumferential surface of the valve body 100. Because of this, it is possible to substantially equalize the pressure of the hydraulic fluid HO inside the oil chamber 112 to the pressure of the hydraulic fluid HO near the first end surface 100c.

Also, in the shock absorber 10, the enlarged surface 100f is formed between the small diameter portion 100a and the large diameter portion 100b in the outer circumferential surface of the valve body 100. With this, as shown in Fig. 6, the flow path area for the hydraulic fluid HO between the outer edge portion 100g of the first end surface 100c and the opening 132a (the oil path 132) is small when the first end surface 100c of the valve body 100 is close to the opening 132a (the oil path 132). In this case, the flow of hydraulic fluid HO between the outer edge portion 100g of the first end surface 100c and the opening 132a (the oil path 132) is fast, so the pressure of hydraulic fluid HO near the outer edge portion 100g of the first end surface 100c is low. For this reason, a force given from the hydraulic fluid HO to the outer edge portion 100g of the first end surface 100c is small. Specifically, there is generated a force (a fluid force) acting to move the valve body 100 toward the opening 132a (the oil path 132). On the other hand, the oil path 134 is expanded to outward beyond the oil path 132. For this reason, even if the first end surface 100c of the valve body 100 is close to the opening 132a of the oil path 132, it is possible to provide a sufficient flow path area for the hydraulic fluid HO in regions in the oil path 134 except for the region between the first end surface 100c and the opening 132a (the oil path 132). Therefore, the flow velocity of hydraulic fluid HO inside the oil path 134 is sufficiently low except for the region between the first end surface 100c and the opening 132a (of the oil path 132). Thus, the pressure of hydraulic fluid HO contacting the outer circumferential surface of the valve body 100 inside the oil path 134 is sufficiently high except for a region near the outer edge portion 100g of the first end surface 100c. In this case, the enlarged surface 100f is given a sufficient force from the hydraulic fluid HO. Therefore, even if there is a difference between the force which the first end surface 100c receives from the hydraulic fluid HO and the force which the second end surface 100d (see Fig. 3) receives from the hydraulic fluid HO, it is possible to offset the difference with the force which the enlarged surface 100f receives from the hydraulic fluid HO. Because of this, the force (the fluid force) working to move the valve body 100 in the axial direction is small. As a result, position adjustment of the valve body 100 by the solenoid coil 120 becomes easy, so it is possible to adjust the damping force generated in the hydraulic cylinder 12 more reliably. Also, since the fluid force is small, a small electromagnetic force is enough to adjust the position of the valve body 100. Because of this, it is possible to reduce power consumption in the solenoid coil 120, and make the solenoid coil 120 in compact size.

Also, in the shock absorber 10, the coil spring 144 for urging the valve body 100 in the axial direction is supported by the spring seat 140 attached to the outer circumferential surface of the valve body 100. In this case, the coil spring 144 can be provided in a radial direction (on the outer side) of the valve body 100. This eliminates a situation where the damping force adjusting portion 16a must have a large length. Because of this, it is possible to make the shock absorber 10 compact.

It should be noted here that in the embodiment described above, the first end surface 100c is moved to come closer to or away from the opening 132a in order to adjust the volume of hydraulic fluid HO which flows from the oil path 134 into the oil path 132. However, the method of adjusting the flow volume of the hydraulic fluid HO is not limited to the examples described above. For example, there may be an arrangement where the valve body's small diameter portion has a greater diameter than that of the opening 132a (the oil path 132), and the valve body' s first end surface is brought into contact with the opening 132a to shut the flow of hydraulic fluid HO from the oil path 134 into the oil path 132. Also, there may be an arrangement where at least a portion of the small diameter portion 100a of the valve body 100 is positioned inside the oil path 132.

In the embodiments described above, description was made for a case where the damping force adjusting device 16 is connected to the hydraulic cylinder 12. However, layout of the damping force adjusting device is not limited to the example described above.

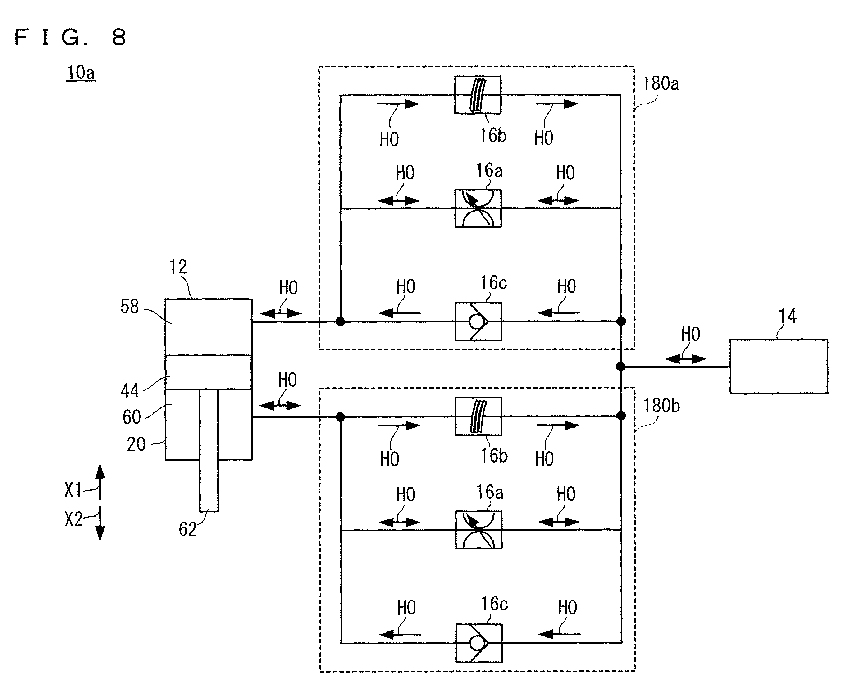

Fig. 8 shows another layout example of the damping force adjusting device in the shock absorber. Fig. 8 shows a shock absorber 10a, where a damping force adjusting device 180a which has essentially the same configuration as the damping force adjusting device 16 is connected to the oil chamber 58 whereas a damping force adjusting device 180b which has essentially the same configuration as the damping force adjusting device 16 is connected to the oil chamber 60. The damping force adjusting devices 180a, 180b are connected to a common reservoir tank 14.

In the shock absorber 10a, movement of the piston assembly 44 in the Arrow X1 direction causes a portion of the hydraulic fluid HO inside the oil chamber 58 to flow into the damping force adjusting device 180a. A portion of the hydraulic fluid HO which has passed through the damping force adjusting portion 16a and the base-valve portion 16b in the damping force adjusting device 180a flows into the reservoir tank 14 while the remaining portion of the hydraulic fluid HO passes through the check-valve portion 16c of the damping force adjusting device 180b and flows into the oil chamber 60. During this, by adjusting the position of the valve body 100 (see Fig. 3) in the damping force adjusting portion 16a of the damping force adjusting device 180a, it is possible to adjust a ratio of the volume of hydraulic fluid HO which passes through the damping force adjusting portion 16a to the volume of hydraulic fluid HO which passes through the base-valve portion 16b. Because of this, a pressure difference between the hydraulic fluid HO inside the oil chamber 58 and the hydraulic fluid HO inside the reservoir tank 14 is adjusted, whereby the damping force generated in the hydraulic cylinder 12 is adjusted.

On the other hand, when the piston assembly 44 moves in the Arrow X2 direction, a portion of the hydraulic fluid HO inside the oil chamber 60 flows into the damping force adjusting device 180b. A portion of the hydraulic fluid HO which has passed through the damping force adjusting portion 16a and the base-valve portion 16b in the damping force adjusting device 180b flows into the reservoir tank 14 while the remaining portion of the hydraulic fluid HO passes through the check-valve portion 16c of the damping force adjusting device 180a and flows into the oil chamber 58. During this, by adjusting the position of the valve body 100 (see Fig. 3) in the damping force adjusting portion 16a of the damping force adjusting device 180b, it is possible to adjust a ratio of a flow volume of the hydraulic fluid HO which passes through the damping force adjusting portion 16a to a flow volume of the hydraulic fluid HO which passes through the base-valve portion 16b. Because of this, a pressure difference between the hydraulic fluid HO inside the oil chamber 60 and the hydraulic fluid HO inside the reservoir tank 14 is adjusted, whereby the damping force generated in the hydraulic cylinder 12 is adjusted.

As described, in the shock absorber 10a, damping force generated in the hydraulic cylinder 12 can be adjusted even in cases where the hydraulic cylinder 12 is under a force acting in the Arrow X2 direction (elongating direction).

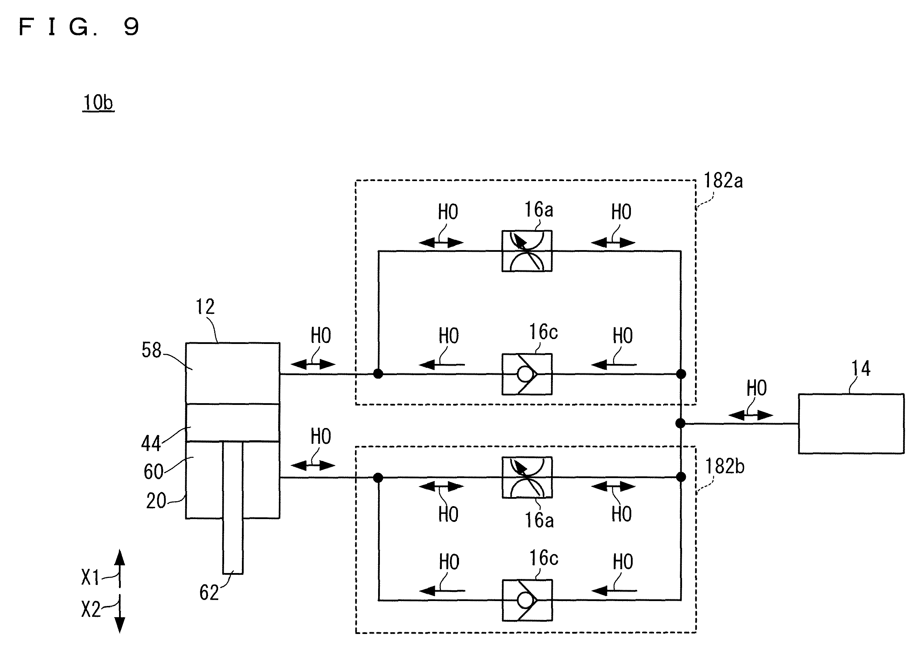

In the embodiments described above, description was made for the damping force adjusting device which includes the damping force adjusting portion 16a, the base-valve portion 16b and the check-valve portion 16c. However, the configuration of the damping force adjusting device is not limited to the embodiments described above. Fig. 9 shows a shock absorber including a damping force adjusting device of a different configuration. The shock absorber 10b in Fig. 9 differs from the shock absorber 10a in Fig. 8 in the following aspects: In the shock absorber 10b, damping force adjusting devices 182a, 182b which do not have the base-valve portion 16b are connected to oil chambers 58, 60 respectively. The damping force adjusting devices 182a, 182b can be implemented by, for example, not forming the oil paths 158 in the damping force adjusting device 16 shown in Fig. 3. In this case, it is not necessary to provide the plate springs 152 (Fig. 3).

In the shock absorber 10b, movement of the piston assembly 44 in the Arrow X1 direction causes a portion of the hydraulic fluid HO inside the oil chamber 58 to flow into the damping force adjusting device 182a. A portion of the hydraulic fluid HO which has passed through the damping force adjusting portion 16a in the damping force adjusting device 182a flows into the reservoir tank 14 while the remaining portion of the hydraulic fluid HO passes through the check-valve portion 16c of the damping force adjusting device 182b and flows into the oil chamber 60. During this, by adjusting the position of the valve body 100 (see Fig. 3) in the damping force adjusting portion 16a of the damping force adjusting device 182a, it is possible to adjust a pressure difference between the hydraulic fluid HO inside the oil chamber 58 and the hydraulic fluid HO inside the reservoir tank 14. Because of this, it is possible to adjust the damping force which is generated in the hydraulic cylinder 12.

On the other hand, when the piston assembly 44 moves in the Arrow X2 direction, a portion of the hydraulic fluid HO inside the oil chamber 60 flows into the damping force adjusting device 182b. A portion of the hydraulic fluid HO which has passed through the damping force adjusting portion 16a in the damping force adjusting device 182b flows into the reservoir tank 14 while the remaining portion of the hydraulic fluid HO passes through the check-valve portion 16c of the damping force adjusting device 182a and flows into the oil chamber 58. During this, by adjusting the position of the valve body 100 (see Fig. 3) in the damping force adjusting portion 16a of the damping force adjusting device 182b, it is possible to adjust a pressure difference between the hydraulic fluid HO inside the oil chamber 60 and the hydraulic fluid HO inside the reservoir tank 14. Because of this, the damping force which is generated in the hydraulic cylinder 12 is adjusted.

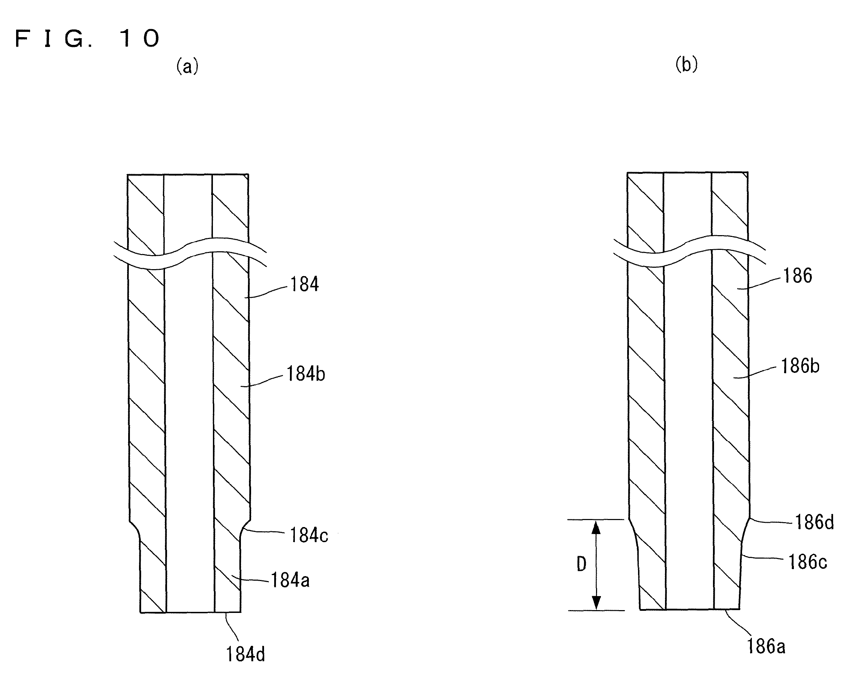

In the embodiments described above, description was made for the valve body 100 having the enlarged surface 100f which is substantially vertical with respect to the axial centerline. However, the shape of the enlarged surface is not limited to the embodiments described above. Specifically, in the enlarged surface, it is only required that a force working in parallel to the axial direction of the valve body (a force pressing the valve body toward the oil chamber 112 (see Fig. 3)) is obtained from the hydraulic fluid HO. Therefore, there may be a valve body 184 as shown in Fig. 10(a) which includes an enlarged surface 184c having a gentle curve between a small diameter portion 184a and a large diameter portion 184b. It should be noted here that the small diameter portion 184a has a constant diameter between a first end surface 184d and the enlarged surface 184c. The small diameter portion 184a has a length in its axial direction which is preferably not smaller than 10 percent, more preferably not smaller than 20 percent, and even more preferably not smaller than 100 percent of the diameter of the small diameter portion 184a (the first end surface 184d). The large diameter portion 184b has a larger diameter than the small diameter portion 184a.

Also, there may be a valve body 186 as shown in Fig. 10 (b), with a gradually increasing diameter (the diameter in a section vertical to the axis of the valve body 186), increasing from a first end surface 186a toward a large diameter portion 186b. It should be noted here that the large diameter portion 186b has a larger diameter than the first end surface 186a. An axial distance D between the first end surface 186a and an end portion 186d of the large diameter portion 186b is preferably not smaller than 10 percent, more preferably not smaller than 20 percent, and even more preferably not smaller than 100 percent of the diameter of the first end surface 186a.

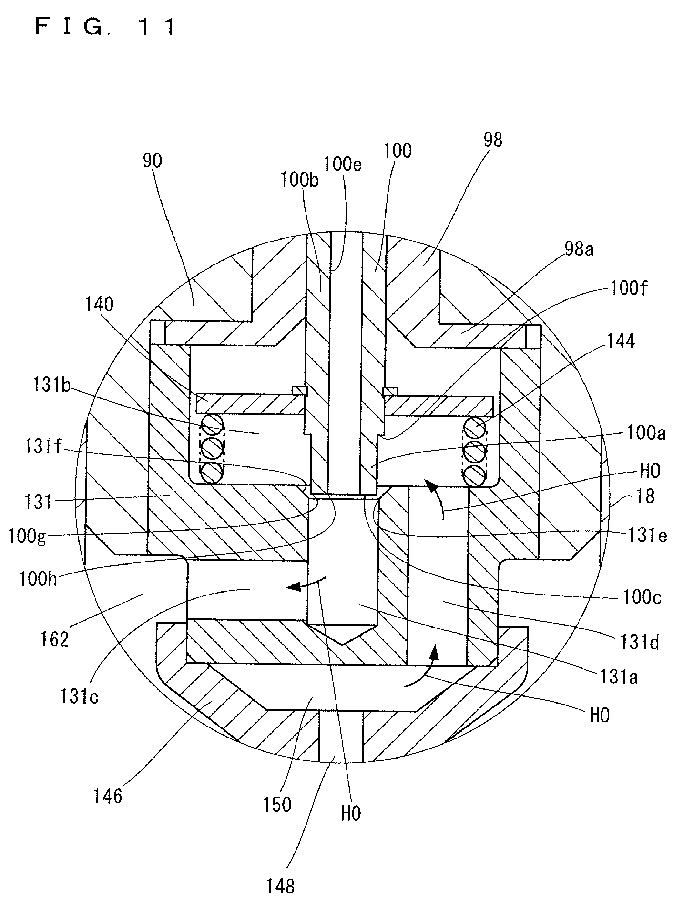

Also, the shape of oil paths in the oil path constitution member of the damping force adjusting portion is not limited to the embodiments described above. Fig. 11 is an enlarged sectional view showing an oil path constitution member 131 which includes oil paths of different shapes. The oil path constitution member 131 shown in Fig. 10 differs from the oil path constitution member 130 shown in Fig. 5 and Fig. 6 in the following aspects:

As shown in Fig. 11, the oil path constitution member 131 has columnar oil paths 131a, 131b, 131c, 131d. The oil path 131c and the oil path 131d have the same shape as the oil paths 136 and the oil paths 138 shown in Fig. 5. The oil path 131a has an opening 131e at its end, and is formed on an axial centerline of the oil path constitution member 131. The diameter of the opening 131e (the oil path 131a) is greater than the diameter of the first end surface 100c (the small diameter portion 100a). The oil path 131b includes an enlarging portion 131f enlarging outward gradually from the opening 131e. The oil path 131b is formed to communicate with the oil path 131a at the opening 131e and to expand outward beyond the opening 131e on the axial centerline of the oil path constitution member 131.

In the present embodiment, the oil path 131a represents the second oil path whereas the oil path 131b represents the third oil path.

Hereinafter, functions and advantages of a shock absorber which includes the oil path constitution member 131.
As shown in Fig. 11, the flow path area for the hydraulic fluid HO between the outer edge portion 100g of the first end surface 100c and the opening 131e (the oil path 131a) is small when the first end surface 100c of the valve body 100 is close to the opening 131e (the oil path 131a). In this case, the flow of hydraulic fluid HO between the outer edge portion 100g of the first end surface 100c and the opening 131e (the oil path 131a) is fast, so the pressure of hydraulic fluid HO near the outer edge portion 100g of the first end surface 100c is low. For this reason, a force given from the hydraulic fluid HO to the outer edge portion 100g of the first end surface 100c is small. Specifically, there is generated a force (a fluid force) acting to move the valve body 100 toward the opening 131e (the oil path 131a). In the oil path constitution member 131, since the oil path 131b includes the enlarging portion 131f, hydraulic fluid HO flowing from the oil path 131b into the oil path 131a flows between an inner circumferential surface of the enlarging portion 131f and an outer circumferential surface of the small diameter portion 100a. For this reason, flow direction of the hydraulic fluid HO is substantially parallel to the axial direction of the valve body 100. Therefore, flow direction of hydraulic fluid HO which flows between the outer edge portion 100g of the first end surface 100c and the opening 131e are also substantially parallel to the axial direction of the valve body 100. In this case, the arrangement prevents the hydraulic fluid HO from flowing substantially in parallel to the first end surface 100c near the first end surface 100c and therefore, prevents the hydraulic fluid HO from flowing at an increased flow velocity near an inner edge portion 100h of the first end surface 100c. Because of this, it is possible to prevent pressure decrease in the hydraulic fluid HO near the inner edge portion 100h of the first end surface 100c. Hence, the force (the fluid force) working to move the valve body 100 in the axial direction is sufficiently small. As a result, position adjustment of the valve body 100 by the solenoid coil 120 (see Fig. 3) is even easier, so it is possible to adjust the damping force generated in the hydraulic cylinder 12 (see Fig. 1) more reliably. Also, since the fluid force is smaller, a smaller electromagnetic force is enough to adjust the position of the valve body 100. Because of this, it is possible to further reduce power consumption in the solenoid coil 120 (see Fig. 3), and make the solenoid coil 120 (see Fig. 3) in even more compact size.

It should be noted here that the enlarging portion 131f shown in Fig. 11, has its inner circumferential surface slanted in a linear fashion (in a longitudinal sectional view). However, the shape of the enlarging portion is not limited to the above embodiment. For example, the enlarging portion may have its inner circumferential surface curved in a convex or concave fashion (in a longitudinal sectional view).

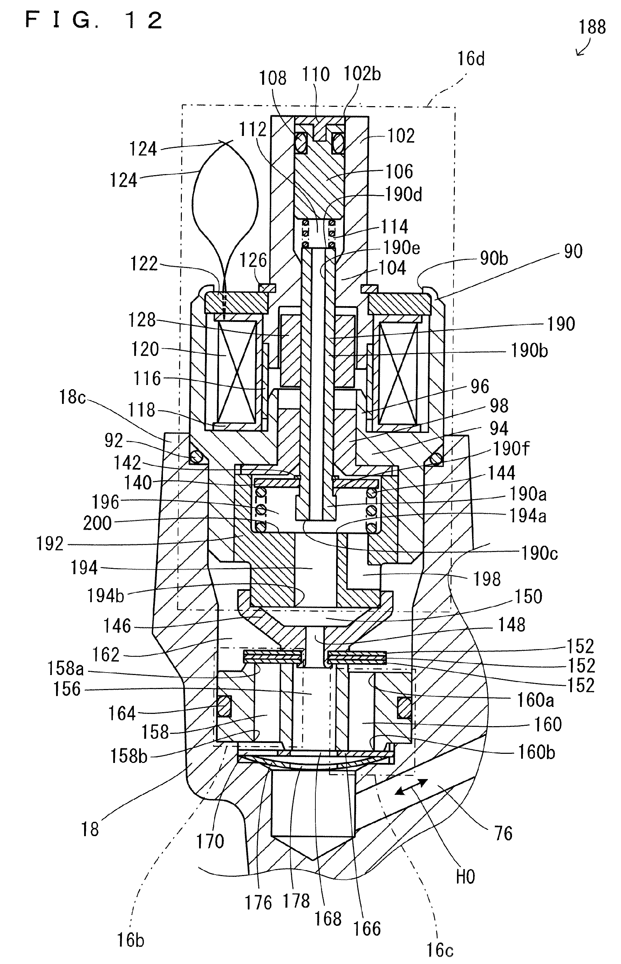

Also, the configuration of the damping force adjusting portion is not limited by the embodiments described above. Fig. 12 is a sectional view showing a damping force adjusting device having a damping force adjusting portion of a different configuration. The damping force adjusting device 188 shown in Fig. 12 differs from the damping force adjusting device 16 shown in Fig. 1 through Fig. 6 in the following aspects:

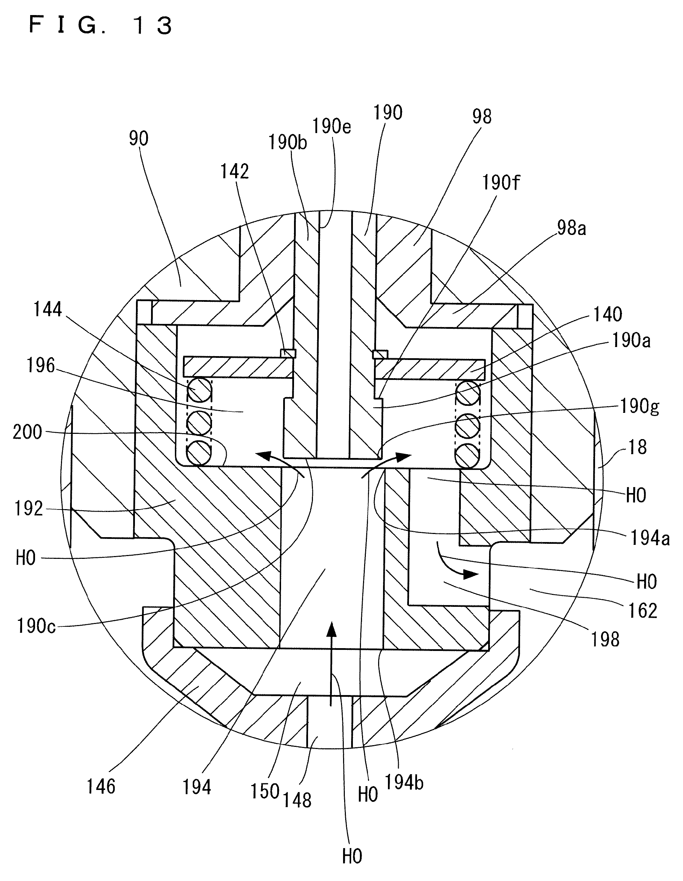

As shown in Fig. 12, a damping force adjusting portion 16d of the damping force adjusting device 188 includes a valve body 190 and an oil path constitution member 192 in place of the valve body 100 and the oil path constitution member 130 in Fig. 3. Referring also to Fig. 13, the valve body 190 has a large diameter portion 190a and a small diameter portion 190b which has a smaller diameter than the large diameter portion 190a. The large diameter portion 190a has an annular first end surface 190c whereas the small diameter portion 190b has an annular second end surface 190d (see Fig. 12). The first end surface 190c has a greater area than the second end surface 190d (see Fig. 12). Also, the valve body 190 has a communication path 190e formed on an axial centerline thereof and communicating the first end surface 190c and the second end surface 190d (see Fig. 12) with each other. In an outer circumferential surface of the valve body 190, between the large diameter portion 190a and the small diameter portion 190b, there is formed an annular boundary surface 190f which is substantially vertical to the axial centerline of the valve body 190. The large diameter portion 190a has a constant diameter between the first end surface 190c and the boundary surface 190f. The large diameter portion 190a has a length in its axial direction which is preferably not smaller than 10 percent, more preferably not smaller than 20 percent, and even more preferably not smaller than 100 percent of the diameter of the large diameter portion 190a (the first end surface 190c). The small diameter portion 190b has a constant diameter between the second end surface 190d (see Fig. 12) and the boundary surface 190f. The diameter of the small diameter portion 190b is smaller than the diameter of the large diameter portion 190a.

The oil path constitution member 192 has oil paths 194, 196, 198 and a flange surface 200. The oil path 194 has openings 194a, 194b at its two ends, and is formed on an axial centerline of the oil path constitution member 192. The oil path 196 communicates with the oil path 194 at the opening 194a, expanding outward beyond the opening 194a on an axial centerline of the oil path constitution member 192. The oil path 196 and the oil chamber 112 (see Fig. 12) inside the support member 102 are opposed to each other with the valve body 190 in between. The first end surface 190c of the valve body 190 is inside the oil path 196. The oil path 196 and the oil chamber 112 communicate with each other via the communication path 190e of the valve body 190. The oil path 194 communicates with the oil path 150 at the oil path 194b. The oil path 196 and the oil path 150 communicate with each other via the oil path 194. The oil path 198 is formed in parallel to the oil path 194, has an end communicating with the oil path 196, and another end communicating with the oil path 162. The flange surface 200 is formed to oppose to the flange portion 98a like the flange surface 130b (see Fig. 3). The spring seat 140 and the stopper 142 are on an outer circumferential surface of the small diameter portion 190b inside the oil path 196. The coil spring 144 is supported by the flange surface 200 and the spring seat 140 radially (on the outer side) of the valve body 190.

Referring to Fig. 12, in the damping force adjusting device 188, a portion of the hydraulic fluid HO which has flowed from the oil path 76 into the tubular portion 18c passes through the communication hole 178 and the cutouts 170, and flows into the oil paths 158 of the base-valve portion 16b whereas the other portion of the hydraulic fluid HO passes through the communication hole 178 and the communication hole 168, and flows into the oil path 156.

The hydraulic fluid HO which has flowed into the oil path 156 passes through the oil path 148, the oil path 150, the oil path 194, the oil path 196 and the oil path 198, and then flows into the oil path 162. Thereafter, the hydraulic fluid HO which has flowed into the oil path 162 flows into the reservoir tank 14 (see Fig. 1) via the oil path 88 (see Fig. 4).

Now, in the damping force adjusting device 188, the valve body 190 can be moved axially by adjusting a magnetic flux density of a magnetic field generated by the solenoid coil 120. Because of this, it is possible to adjust the volume of hydraulic fluid HO which flows inside the oil path constitution member 192. Specifically, it is possible by moving the valve body 190 so that the first end surface 190c of the valve body 190 comes closer to the opening 194a (the oil path 194), to decrease a flow path area for the hydraulic fluid HO between the first end surface 190c and the opening 194a (the oil path 194). Because of this, it is possible to decrease the volume of the hydraulic fluid HO which flows from the oil path 194 into the oil path 196. In this case, a portion of the hydraulic fluid HO which has flowed from the oil path 76 into the tubular portion 18c flows into the oil paths 158 in an increased volume. Because of this, there is an increase in the volume of the hydraulic fluid HO which flows against the resistance from the plate springs 152 as a portion of the hydraulic fluid HO which flows from the oil path 76 to the reservoir tank 14 (see Fig. 1) via the damping force adjusting device 188. As a result, a pressure difference between the hydraulic fluid HO inside the oil chamber 58 (see Fig. 1) and the hydraulic fluid HO inside the reservoir tank 14 (Fig. 1) increases, which increases the damping force generated in the hydraulic cylinder 12.

On the other hand, it is possible by moving the valve body 190 so that the first end surface 190c moves away from the opening 194a (the oil path 194), to increase a flow path area for the hydraulic fluid HO between the first end surface 190c and the opening 194a (the oil path 194). Because of this, it is possible to increase the flow volume of the hydraulic fluid HO which flows from the oil path 194 into the oil path 196. In this case, a portion of the hydraulic fluid HO which has flowed from the oil path 76 into the tubular portion 18c flows into the oil paths 158 in a decreased volume. Because of this, there is a decrease in the volume of the hydraulic fluid HO which flows against the resistance from the plate springs 152 within the hydraulic fluid HO which flows from the oil path 76 to the reservoir tank 14 (see Fig. 1) via the damping force adjusting device 188. As a result, a pressure difference between the hydraulic fluid HO inside the oil chamber 58 (see Fig. 1) and the hydraulic fluid HO inside the reservoir tank 14 (Fig. 1) decreases, which decreases the damping force generated in the hydraulic cylinder 12.

In the present embodiment, the oil paths 76, 148, 150, 156, 162 are included in the first oil path; the oil path 194 represents the second oil path; the oil path 196 represents the third oil path; the solenoid coil 120 represents the electromagnetic actuator; the coil spring 144 represents the urging member; and the spring seat 140 represents the support member.

Next, functions and advantages of a shock absorber which includes the damping force adjusting device 188.
In the damping force adjusting device 188, the valve body 190 for adjusting the damping force of the hydraulic cylinder 12 is on the inner circumferential surface of the plunger 128, and therefore it is possible to prevent a situation where the damping force adjusting portion 16d must have a large overall length. Because of this, it is possible to make the shock absorber compact.

Also, the oil path 196 and the oil chamber 112 communicate with each other via the communication path 190e of the valve body 190. In this case, the pressure of the hydraulic fluid HO inside the oil chamber 112 is substantially equal to the pressure of the hydraulic fluid HO near the first end surface 190c. Therefore, the pressure which the first end surface 190c receives from hydraulic fluid HO is substantially equal to the pressure which the second end surface 190d receives from hydraulic fluid HO. Because of this, it is possible to prevent the valve body 190 from moving in the axial direction due to the pressure which the first end surface 190c receives from the hydraulic fluid HO. As a result, position adjustment of the valve body 190 by the solenoid coil 120 becomes easy, so it is possible to appropriately adjust the damping force generated in the hydraulic cylinder 12.

Also, the first end surface 190c has a greater area than the second end surface 190d. In this arrangement, as shown in Fig. 13, when the first end surface 190c of the valve body 190 comes closer to the opening 194a (the oil path 194), the flow path area for the hydraulic fluid HO between an outer edge portion 190g of the first end surface 190c and the opening 194a (the oil path 194) significantly decreases. In this case, the flow velocity of hydraulic fluid HO passing between the outer edge portion 190g of the first end surface 190c and the opening 194a (the oil path 194) increases largely, so the pressure of hydraulic fluid HO near the outer edge portion 190g of the first end surface 190c significantly decreases. For this reason, a force given from the hydraulic fluid HO to the outer edge portion 190g of the first end surface 190c decreases. Specifically, there is generated a force (a fluid force) acting to move the valve body 190 toward the opening 194a (the oil path 194). On the other hand, because of the large decrease in the flow path area between the outer edge portion 190g of the first end surface 190c and the oil path 194, the volume of hydraulic fluid HO flowing from the oil path 194 to the oil path 196 decreases. In this case, the pressure of hydraulic fluid HO inside the oil path 194 becomes sufficiently high since the flow velocity of the hydraulic fluid HO inside the oil path 194 decreases. For this reason, the pressure of hydraulic fluid HO which flows out of the oil path 194 and makes contact with the first end surface 190c becomes sufficiently high except for a region near the outer edge portion 190g. Since the area of the first end surface 190c is larger than the second end surface 190d (see Fig. 12), a sufficient pressure is obtained from the hydraulic fluid HO to the first end surface 190c even if pressure of the hydraulic fluid HO near the outer edge portion 190g of the first end surface 190c decreases. Because of this, the arrangement prevents a situation in which there is a difference between a force which the first end surface 190c receives from the hydraulic fluid HO and a force which the second end surface 190d receives from the hydraulic fluid HO, and hence, prevents the valve body 190 from moving in the axial direction. As a result, position adjustment of the valve body 190 by the solenoid coil 120 becomes easy, so it is possible to adjust the damping force generated in the hydraulic cylinder 12 more reliably.

Also, the coil spring 144 for urging the valve body 190 in the axial direction is supported by the spring seat 140 attached to the outer circumferential surface of the valve body 190. In this case, the coil spring 144 can be provided in a radial direction (on the outer side) of the valve body 190, and this eliminates a situation where the damping force adjusting portion 16d must have a large length. Because of this, it is possible to make the shock absorber compact.

In the embodiments described above, description was made for cylindrical valve bodies. However, the shape of the valve body is not limited to the embodiments described above. For example, the valve body may have a hollow square-bar shape. Also, the shape of the oil paths is not limited to those in the embodiments, and the oil paths may have a polygonal or ellipsoidal section.

Also, chamfering may be provided on an outer edge portion of the first end surface of the valve body. In this case, the chamfered outer edge portion is also included in the first end surface. Likewise, chamfering may be provided on an outer edge portion of the second end surface of the valve body. In this case, the chamfered outer edge portion is also included in the second end surface.

In the embodiments described above, description was made for the reservoir tank 14 which includes the bladder 86. However, the shock absorber may include a reservoir tank which includes a free piston.

The present invention being thus far described in terms of preferred embodiments, it is obvious that these may be varied in many ways within the scope and the spirit of the present invention. The scope of the present invention is only limited by the accompanied claims.

### REFERENCE SIGNS LIST

- 10: Shock absorber
- 12: Hydraulic cylinder
- 14: Reservoir tank
- 16, 180a, 180b, 182a, 182b, 188: Damping force adjusting devices
- 16a, 16d: Damping force adjusting portions
- 16b: Base-valve portion
- 16c: Check-valve portion
- 18: Common member
- 20: Cylinder
- 26: Rod guide
- 44: Piston assembly
- 100, 184, 186, 190: Valve bodies
- 100c, 186a, 190c: First end surfaces
- 100d, 190d: Second end surfaces
- 100e, 190e: Communication paths
- 100f, 184c, 186c: Enlarged surfaces
- 120: Solenoid coil
- 128: Plunger
- 130: Oil path constitution member
- 140: Spring seat
- 144: Coil spring

## Claims

1. A shock absorber comprising:
a hydraulic cylinder which generates a damping force;
a reservoir portion which stores at least a portion of hydraulic fluid that flows out of the hydraulic cylinder;
a damping force adjusting portion which adjusts the damping force by adjusting a volume of hydraulic fluid that flows out of the hydraulic cylinder; and
a first oil path which provides communication between the hydraulic cylinder and the reservoir portion via the damping force adjusting portion; wherein
the damping force adjusting portion includes:
a second oil path having an opening at one end, and passed by hydraulic fluid which flows through the first oil path;
a third oil path passed by hydraulic fluid which flows through the first oil path, communicating with the second oil path at the opening, and expanding outward beyond the opening;
a tubular plunger;
an electromagnetic actuator which generates a driving force for moving the plunger in an axial direction;
a hollow tubular valve body which includes a first end surface, a second end surface and a communication path between the first end surface and the second end surface, and is fixed to an inner surface of the plunger; and
an oil chamber opposed to the third oil path with the valve body in between;
wherein the first end surface is opposed to the opening of the second oil path inside the third oil path whereas the second end surface is disposed in the oil chamber.

2. The shock absorber according to Claim 1, wherein
the valve body includes an enlarged surface in an outer surface, which is disposed in the third oil path and is a surface expanded outward with respect to an axial centerline beyond the first end surface, and
hydraulic fluid which flows out of the hydraulic cylinder flows through the third oil path and into the second oil path.

3. The shock absorber according to Claim 2, wherein the third oil path includes an enlarging portion enlarging outward gradually from the opening of the second oil path.

4. The shock absorber according to Claim 1, wherein
the first end surface has a larger area than the second end surface, and
hydraulic fluid which flows out of the hydraulic cylinder flows through the second oil path and into the third oil path.

5. The shock absorber according to one of Claims 1 through 4, wherein the damping force adjusting portion further includes an urging member which urges the valve body in an axial direction, and a support member which is provided on an outer surface of the valve body and supports the urging member.
